(19) **Europäisches Patentamt European Patent Office Office européen des brevets**

(11) **EP 4 622 146 A1**

(12) **EUROPEAN PATENT APPLICATION**

(43) Date of publication:
24.09.2025 Bulletin 2025/39

(21) Application number: 24165040.7

(22) Date of filing: 21.03.2024

(51) International Patent Classification (IPC):
$H04L\ 1/00^{(2006.01)}$     $H04W\ 28/22^{(2009.01)}$

(52) Cooperative Patent Classification (CPC):
H04L 1/0003; H04L 1/0009; H04W 28/22

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Deutsche Telekom AG**
**53113 Bonn (DE)**

(72) Inventor: **XU, Bangnan**
**64291 Darmstadt (DE)**

(74) Representative: **2SPL Patentanwälte PartG mbB**
**Landaubogen 3**
**81373 München (DE)**

(54) **METHOD, COMPUTER PROGRAM, AND APPARATUS FOR PREDICTING A DATA RATE IN A MOBILE COMMUNICATION SYSTEM**

(57) Examples relate to a method, a computer program, and an apparatus for predicting a data rate in a mobile communication system. The method (10) comprises considering (11) a grid of adjacent regions overlaying a coverage area of the mobile communication system and estimating (12) a reception quality for the regions of the grid to obtain estimated reception quality values for the regions of the grid. For a UE in a specific region the method comprises determining (13) a transmission format for the specific region based on the estimated reception quality value for the specific region and determining (14) a spatial transmission mode for the specific region based on the estimated reception quality value for the specific region. The method (10) further comprises predicting (15) a data rate for the UE in the specific region based on the transmission format and based on the spatial transmission mode. The predicting (15) of the data rate further comprises calculating a data rate for the specific region based on the transmission format, the spatial transmission mode, and system transmission parameters, and the predicting (15) of the data rate further comprises correcting the calculated data rate by a delta value.

Fig. 1

EP 4 622 146 A1

## Description

### Field

Examples relate to a method, a computer program, and an apparatus for predicting a data rate in a mobile communication system, more particularly, but not exclusively, to a concept for predicting a data rate in a grid of regions, taking into account reasonable transmission formats and spatial transmission modes.

### Background

Mobile communication systems have evolved over the last decades and high-quality wireless services have become available. Emerging 5G (5th Generation mobile network) services, e.g. live video productions, have very challenging requirements on throughput and/or latency. To meet such challenging requirements and to use the radio resources efficiently, it is beneficial to predict receiving conditions and available data rates at the location of a mobile terminal. There are several indicators that may be used to predict or indicate a reception quality. One example is the reference signal receiving power (RSRP), which is used in 5G networks as defined by the 3rd Generation Partnership Project (3GPP). A cell specific reference signal is transmitted by a base station or nodeB. At user equipment, UE, the reference signal can be measured, e.g. in terms of reception power at the UE.

For example, RSRP is the linear average of reference signal power (in Watts) across the specified bandwidth. A UE may measure the RSRP for cell selection, reselection and handover. Further details on a formal definition of RSRP can be found in 3GPP Technical specification (TS) 36.214. For RSRP determination cell-specific reference signals R0 according 3GPP TS 36.211 shall be used. If the UE can reliably detect that R1 is available, it may use R1 in addition to R0 to determine RSRP.

In 5G and future mobile networks, advanced network features are required to support challenging mobile services like live video production, AR/VR (Augmented Reality/Virtual Reality) and AI (Artificial Intelligence) with very high QoS (Quality of Service, e.g. data rate) requirements. Such kind of requirements cannot be met at any location and at any time in 5G and future networks. Therefore, an achievable data rate of a mobile device needs to be predicted before such challenging services can be accepted for a mobile terminal.

### Summary

It is a finding of the present disclosure that a data rate a mobile device can achieve not only depends on the reception quality at the location of the mobile device, but it also depends on a transmission format, such as the used MCS (Modulation and Coding) scheme, the spatial transmission mode, e.g. the MIMO layers (Multiple-Input-Multiple-Output), and assigned RBs (radio Resource Blocks). The assignment of RBs to a mobile device depends on a RB usage policy or scheduling algorithm. A scheduler may be configured, for example, to assign a fixed number of RBs to a mobile device. It that case, the bandwidth or spectral share of a mobile device once scheduled would always be the same. However, which MCS and how many MIMO layers to be used for a mobile device are decided by a base station based on many factors in real time. These factors are, among others, channel quality, radio environment characteristics and channel error rate, etc. If the data rate of a mobile terminal needs to be predicted before a real time measurement can be done, then an MCS index and MIMO layers may need to be predicted by an algorithm. Examples may provide an algorithm for the prediction of MCS index and MIMO layers and with that a data rate per RB (bps/RB) of a mobile device can be derived.

Examples provide a method for predicting a data rate of user equipment, UE, in a mobile communication system. The method comprises considering a grid of adjacent regions overlaying a coverage area of the mobile communication system and estimating a reception quality for the regions of the grid to obtain estimated reception quality values for the regions of the grid. For a UE in a specific region the method comprises determining a transmission format for the specific region based on the estimated reception quality value for the specific region and determining a spatial transmission mode for the specific region based on the estimated reception quality value for the specific region. The method further comprises predicting a data rate for the UE in the specific region based on the transmission format and based on the spatial transmission mode. The predicting of the data rate further comprises calculating a data rate for the specific region based on the transmission format, the spatial transmission mode, and system transmission parameters. The predicting of the data rate further comprises correcting the calculated data rate by a delta value. Examples therewith provide an efficient method for predicting a data rate of a UE.

For example, the estimated reception quality is based on a reference signal reception power, RSRP, estimated for a UE in a region. The transmission format may comprise a modulation and coding scheme (MCS) to be used for the UE in the specific region. Furthermore, the spatial transmission scheme may comprise a number of Multiple-Input-Multiple-Output layers to be used for the UE in the specific region. Examples may therewith consider an MCS and a spatial multiplexing gain for the prediction of a data rate. In examples the data rate may be predicted in an absolute or in a relative manner, for example, the data rate may be predicted per bandwidth or per resource block, which is further specified by the mobile communication system the example is used in.

The determining of the transmission format may be further based on an estimated traffic load in one or more neighboring radio cells of the specific region. Examples may efficiently consider the load in the system by taking into account traffic that is generated in neighbor cells, which are relevant for the specific region. Neighbor cells may use different radiation angles, which can be more or less relevant for the specific region, and which may therewith generate more or less relevant interference for the specific region. The determining of the transmission format may comprise using a transmission format look-up table that provides a transmission format for an estimated reception quality and/or an estimated traffic load in one or more neighboring radio cells of the specific region. The look-up table may provide a basis for an efficient implementation of the prediction method in examples. Furthermore, the determining of the transmission format might comprise using a transmission format look-up table that provides a transmission format considering one or more parameters of the group of a presence of a line-of-sight radio channel, a presence of a non-line-of-sight radio channel, grade of reflections in the radio channel, and a distance of the UE to the serving antenna. Hence, at least some examples may consider further contributing factors or parameters in the prediction or estimation of the data rate.

In further examples the method might comprise updating the transmission format look-up table based on measurements conducted by UEs and/or other devices in the regions. Examples may enable an efficient update mechanism so the look-up table adapts to changes in the radio environment and the prediction can be adaptively tuned to the radio or traffic environment.

In further examples the determining of the spatial transmission mode may be further based on a grade of reflection of the radio channel in the specific region. Examples therewith consider a spatial diversity that is offered by a radio channel. The determining of the spatial transmission mode may further comprise using a spatial transmission mode look-up table that provides a spatial transmission mode for an estimated reception quality and/or a grade of reflection of the radio channel in a region. Likewise, examples may provide an efficient implementation of the prediction method using a look-up table. The determining of the spatial transmission mode might further comprise using a spatial transmission mode look-up table that provides a spatial transmission mode considering one or more parameters of the group of a presence of a line-of-sight radio channel, a presence of a non-line-of-sight radio channel, a maximum number of MIMO layers supported by the UE, and a distance of the UE to the serving antenna. Examples may consider further relevant parameters and contributors for predicting the spatial transmission mode. Moreover, at least some example methods may further comprise updating the spatial transmission mode look-up table based on measurements conducted by UEs and/or other devices in the regions. The look-up table may hence be dynamically adapted to the radio environment using measurements. Thereby prediction quality may be improved.

In further examples the method might further comprise deriving the delta value from measured and calculated data rates for similar transmission conditions as in the specific region. For example, the deriving of the delta value comprises, if for the specific region a measured data rate is not available, determining if a measured data rate is available for the similar transmission conditions for one or more neighbor regions of the specific region that is served by the same radio cell. In case it is available the deriving comprises calculating a data rate for the one or more neighbor regions and calculating a delta value per neighbor region based on a difference between the measured data rate and the calculated data rate of said neighbor region. In case multiple delta values are available for multiple neighbor regions, a weighted average for the delta value is determined. In case no measured data rate is available, a cell specific delta value may be used for the similar transmission conditions if available and if not, a global delta value for the similar transmission conditions may be used. In examples the prediction may be improved by determining the delta value based on similar transmission conditions if available in neighbor regions of the specific region.

For example, the similar transmission conditions may comprise one or more elements of the group of the neighbor region has a reception quality within a predefined range of the reception quality of the specific region, the neighbor region has a traffic load of its relevant neighboring radio cells within a predefined range of the traffic load of the relevant neighboring radio cells of the specific region, the neighbor region has a radio channel with a grade of reflection within a predefined range of the grade of reflection of the radio channel of the specific region, the neighbor region and the specific region have radio channels with or without a line-of-sight path, and the neighbor region and the specific region have a same spatial transmission mode. Prediction quality and reliability may be improved by considering neighbor cells with transmission condition as a close as possible to the transmission condition in the specific region.

A computer program having a program code for performing one of the methods described herein, when the computer program is executed on a computer, a processor, or a programmable hardware component is a further example. Another example is an apparatus for a mobile communication system. The apparatus comprises one or more interfaces, which are configured to communicate in the mobile communication system and one or more processing devices, which are configured to perform one of the methods described herein.

Examples further provide a mobile communication system comprising an example of the apparatus. A further example is user equipment or a network component, such as a server or an access node, comprising the apparatus. Yet another example is a mobile communication system with an example of the user equipment and/or an example of the network component.

## Brief description of the Figures

Some examples of apparatuses, methods, and/or computer programs will be described in the following by way of example only, and with reference to the accompanying figures, in which

Fig. 1 shows a flowchart of an example of a method for predicting a data rate of user equipment in a mobile communication system;

Fig. 2 shows a block diagram of an example of an apparatus for predicting a data rate for user equipment in a mobile communication system;

Fig. 3 shows an example of a grid of regions; and

Fig. 4 illustrates an example scenario of a live video production.

## Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

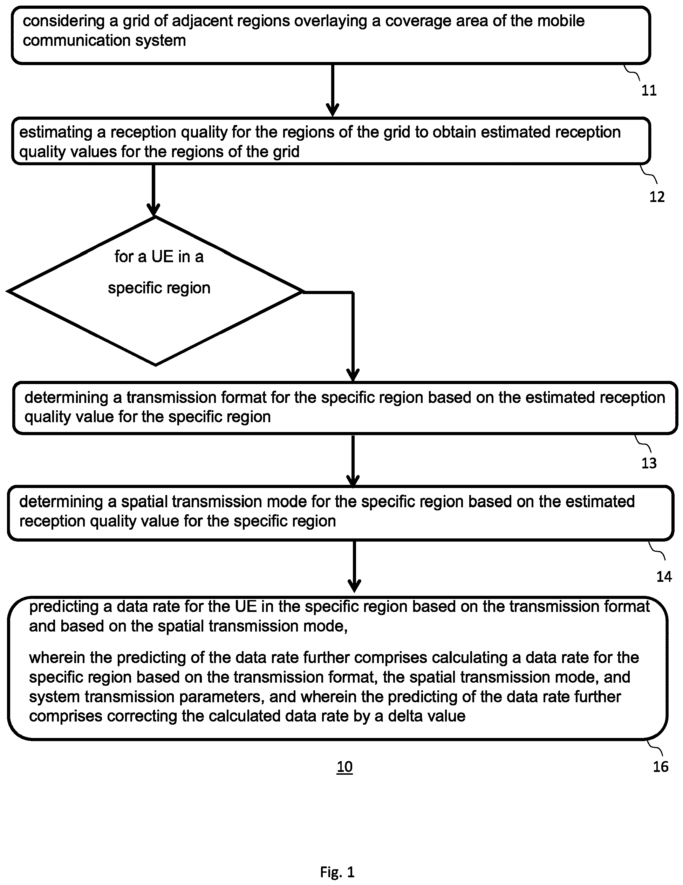

Fig. 1 shows a flowchart of an example of a method 10 for predicting a data rate of user equipment in a mobile communication system. The method 10 comprises considering 11 a grid of adjacent regions overlaying a coverage area of the mobile communication system and estimating 12 a reception quality for the regions of the grid to obtain estimated reception quality values for the regions of the grid. For a UE in a specific region the method 10 comprises determining 13 a transmission format for the specific region based on the estimated reception quality value for the specific region and determining 14 a spatial transmission mode for the specific region based on the estimated reception quality value for the specific region. The method 10 further comprises predicting 15 a data rate for the UE in the specific region based on the transmission format and based on the spatial transmission mode. The predicting 15 of the data rate further comprises calculating a data rate for the specific region based on the transmission format, the spatial transmission mode, and system transmission parameters, and the predicting 15 of the data rate further comprises correcting the calculated data rate by a delta value.

For example, the estimated reception quality is based on a reference signal reception power, RSRP, estimated for a UE in a region. The estimation of the reception quality may comprise calculating a reception quality and correcting the calculated reception quality using a measured reception quality, e.g. measured reception quality from one or more neighbor regions. The measured reception quality per region may be any measure that enables an evaluation of a data reception quality in a region. For example, a measured reception quality is a reference signal reception power, RSRP, measured by user equipment in a region, the calculated reception quality is a calculated RSRP for a region, and the predicted or estimated reception quality is a predicted or estimated RSRP for a region.

RSRP is only one quality measure as defined by 3GPP. There are multiple other quality measures that could be used reception quality measure. Examples are received signal code power (RSCP), reference signal received quality (RSRQ), reference signal signal-to-interference ratio (RS SIR), reference signal signal-to-interference-and-noise ratio (RS SINR), reference signal signal-to-noise ratio (RS SNR), etc. The term reference signal indicates that the signal used for conducting such a measurement is known at the mobile terminal or UE. There are other terms for known signals such as pilot signal, pilot symbol, pilot sequence, reference symbol, reference sequence, training signal, training symbol, training sequence, etc.

In examples the transmission format may comprise a modulation and coding scheme to be used for the UE in the specific region. This is one example, there are many other transmission formats that are conceivable, and which may comprise one or more further transmission parameters such as a spreading factor, a bandwidth, a transmission power, a numerology, etc. The spatial transmission scheme may comprise a number of Multiple-Input-Multiple-Output layers to be used for the UE in the specific region. In examples there may be further or alternative spatial transmission mode parameters, such as a beam, a steering vector, a polarization, an antenna, a transmit diversity mode, a spatial channel or subchannel, an antenna port, etc.

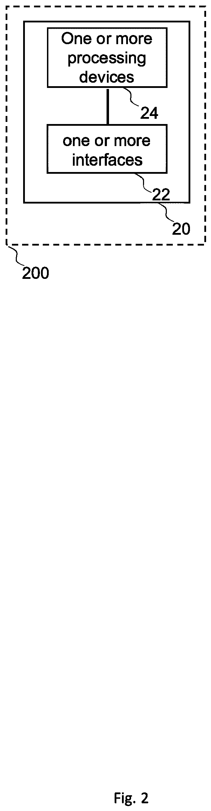

Fig. 2 shows a block diagram of an example of an apparatus 20 for predicting a data rate for user equipment in a mobile communication system. The apparatus 20 for the mobile communication system comprises one or more interfaces 22, which are configured to communicate in the mobile communication system, and which are coupled to one or more processing devices 24. The one or more processing devices 24 are configured to perform one of the methods described herein. Fig. 2 also illustrates an example of a UE or network entity 200 comprising an example of the apparatus 20. The example of the UE or network component 200 is shown in dotted lines as it is optional from the perspective of the apparatus 20. Yet another example is a mobile communication system with an example of the user equipment 200 and/or an example of the network component 200.

As illustrated in Fig. 2, the respective one or more processing devices 24 are coupled to the one or more interfaces 22. The one or more interfaces 22 may correspond to one or more inputs and/or outputs for receiving and/or transmitting information, which may be in digital (bit) values according to a specified code or protocol, within a module, between modules or between modules of different entities. For example, an interface 22 may comprise interface circuitry configured to receive and/or transmit information. In examples an interface 22 may correspond to any means for obtaining, receiving, transmitting or providing analog or digital signals or information, e.g., any connector, contact, pin, register, input port, output port, conductor, lane, etc., which allows providing or obtaining a signal or information. An interface 22 may be configured to communicate (transmit, receive, or both) in a wireless or wireline manner and it may be configured to communicate, i.e., transmit and/or receive signals, information with further internal or external components. The one or more interfaces 22 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 24 may be implemented using one or more processing units, one or more circuitries, any means for processing, such as a processor, a computer or a programmable hardware component being operable with accordingly adapted software. In other words, the described function of the one or more processing devices 24 may as well be implemented in software, which is then executed on one or more programmable hardware components. Such hardware components may comprise a general-purpose processor, a Digital Signal Processor (DSP), a micro-controller, etc.

In examples measurements may be carried out by UEs, mobile terminals, or communication devices, which may communicate in the mobile communication system with the network entity, e.g., a base station. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity may correspond to a NodeB, an eNodeB, an ngNB, a BTS (Base Transceiver Station), an access point, etc.

The mobile communication system may be cellular. The term cell refers to a coverage area of radio services provided by a transmission point, a remote unit, a remote head, a remote radio head, communication device, network entity or a NodeB, an eNodeB, an ngNB, respectively. It should be noted that a base station or any of the listed entities may provide multiple cells. However, since a cell is provided by a base station, the terms cell and base station may be used synonymously in this description, even if a base station provides multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6th Generation system (6G), a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

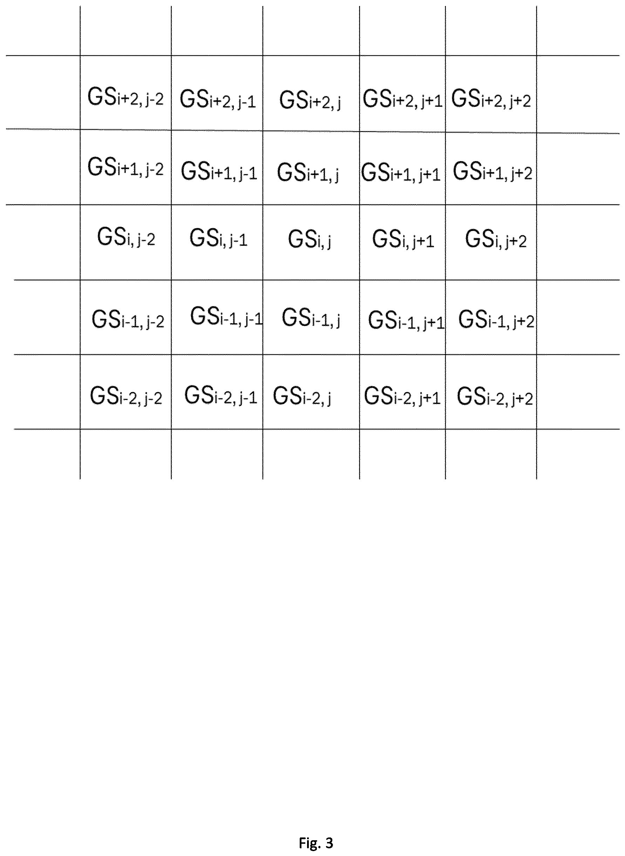

In the following examples of methods 10 for predicting a data rate will be detailed. For example, the prediction of the data rate, e.g. in terms of bps/RB (bit per second/RB), is based on an RSRP map. The RSRP map can be created by measurements and channel modelling. In this example a RSRP map is built in a grid with squares, e. g. 20 m x 20 m, called grid square (GS), shown in Fig. 3. Each $GS_{ij}$ is associated with a RSRP, e. g. $R_{ij}$. In addition to RSRP, each GS is associated with measured bps/RBs and/or predicted bps/RBs. Each bps/RB is valid for a specific prediction parameter vector, e. g. RSPR, traffic load, MIMO layers, LOS (Line-of-Sight) or NLOS (Non-Line-of-Sight) and the grade of reflections (how many paths or reflections are present in the radio channel and what is their angular spread). To predict bps/RB in a grid $GS_{i,j}$, in the present example it is necessary to predict $MCS_{i,j}$ and MIMO layers. MSC index and MIMO layers are normally decided by a base station based on many factors, e. g. CQI (Channel Quality Information) and multipath reflections in real time.

Fig. 3 shows an example of a grid of regions. Examples may provide a system and algorithm for RSRP prediction, for which further details can be found in EP 24 162 491. Fig. 3 shows an example of a grid of regions, which can be used to overlay one or more cells of a mobile communication system. Fig. 3 shows a grid structure with regions GS. To create an RSRP map for a mobile network, a geographical coverage of the mobile network can be built in a grid with regions in squares, e. g. 5m x 5m, 10m x 10m, 20m x 20 m, 50m x 50m, 100m x 100m, called grid square (GS) in the example shown in Fig. 3. In this specific example a region has the shape of a square. A square is therefore an example shape of a region. In other examples almost any other shape of a region is also conceivable, e.g. hexagon, triangle, rectangle, polygon, mixed, etc. Each GS is associated with a predicted RSRP, e.g. $R_{ij}$, in a certain grid square $GS_{ij}$ and a measured RSRP as well if available (i and j are positive integers). The measured RSRP can be a mean value of multiple measured RSRPs. In examples of the method 10, the estimated reception quality may be an average of a plurality of measurements taken in said square (region). In further examples a combination of a calculation based on channel models and individual measurements made by a mobile terminal or any other measurement device may be used for the estimation.

Fig. 3 also illustrates the neighbor relations structure of the regions. For example, region $GS_{i,j}$ has eight neighbor regions in a first tier ($GS_{i+1,j-1}$, $GS_{i+1,j}$, $GS_{i+1,j+1}$, $GS_{i,j-1}$, $GS_{i,j+1}$, $GS_{i-1,j-1}$, $GS_{i-1,j}$, and $GS_{i-1,j+1}$). The regions of the first tier are also referred to as first level regions and comprise the direct neighbor regions. Fig. 3 also illustrates regions of a second tier, which are the 16 regions being directly adjacent to the regions of the first tier but not adjacent to region $GS_{i,j}$. The second tier or second level regions comprises the outer regions shown in Fig. 3: $GS_{i+2,(j-2,...,j+2)}$, $GS_{(i+1, i, i-1),j-2}$, $GS_{(i+1, i, i-1),j+2}$, and $GS_{i-2, (j-2,...,j+2)}$. The second tier is made up by the regions that are distanced from region $GS_{i,j}$ by one intermediate region. Of, course in a practical example there are further tiers and higher-level regions as well.

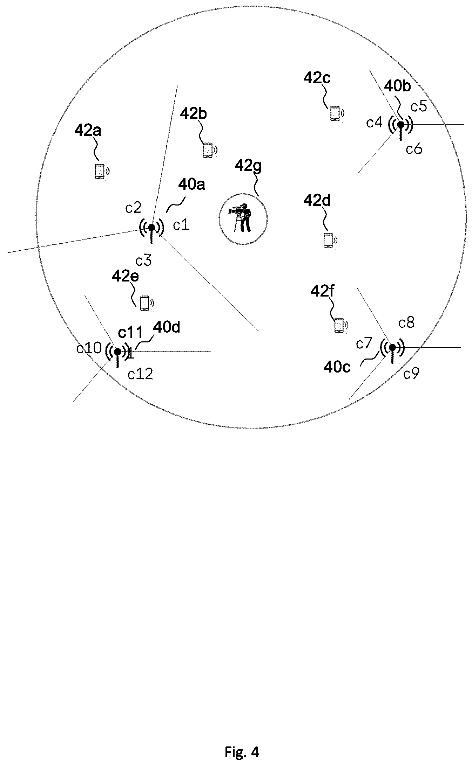

Fig. 4 illustrates an example scenario of a live video production, in which it is beneficial to predict the data rate. For example, a producer would like to know in advance (e.g. days or weeks before), whether a data rate at a certain location will be sufficient for live video transmission. Fig. 4 shows four antenna locations 40a, 40b, 40c, and 40d, each having three sectors or cells c1, c2, c3 at 40a, c4, c5, c6 at 40b, c7, c8, c9 at 40c, and c10, c11, c12 at 40d. The sectors correspond to cells in this example, which are used to serve a number of UEs 42a, 42b, 42c, 42d, 42e, 42f and 42g. In the example of Fig. 4 the intention is to use the UEs for video production. It is therefore desirable to predict the data rate the individual UEs can support to assure that they can meet quality requirements of live video production.

Channel quality is strongly impacted by the traffic load of relevant neighboring cells. The relevant neighboring cells are cells of which DL (Downlink) transmission can reach the mobile device and UL (Uplink) transmission can reach the serving radio cell of the mobile device. The determining 13 of the transmission format is therefore further based on an estimated traffic load in one or more neighboring radio cells of the specific region. In Fig. 4, the relevant cells of the live video production terminal 42g in the circle are C1, C4 and C7. The traffic load of relevant neighboring cells is used as main parameter to predict MCS in this example. The multipath reflection that impacts the MIMO layers is estimated according to the grade of reflection of radio environment.

In the present example the determining 13 of the transmission format comprises using a transmission format look-up table that provides a transmission format for an estimated reception quality and/or an estimated traffic load in one or more neighboring radio cells of the specific region. In further examples, further parameters may be considered for the look-up table. The determining 13 of the transmission format may comprise using a transmission format look-up table that provides a transmission format considering one or more parameters of the group of presence of a line- of-sight radio channel, presence of a non-line-of-sight radio channel, a grade of reflections in the radio channel, a distance of the UE to the serving antenna and potentially others.

Moreover, in the present example the method 10, further comprises updating the transmission format look-up table based on measurements conducted by UEs and/or other devices in the regions. An MCS index predicted for a mobile terminal is read from a MCS prediction table, see Table 1 below as an example. In Table 1 the RSRP is given in dBm, the traffic load in % and the MCS index based on the 3GPP MCS index table. For further details the 3GPP specifications can be consulted, e.g. 3GPP TS (Technical Specification) 38.214 V18.1.0 (2023-12) and 3GPP TS 38.306 V18.0.0 (2023-12), and the MCS prediction table is created for a specific prediction parameter vector by measurement and updated continuously. The MCS index in Table 1 is an average value of all measured values of the same or similar (within a predefined range) prediction parameter vector, e. g. RSPR, traffic load, MIMO layers and LOS or NLOS, and the grade of reflections.

Table 1: MCS prediction table using RSRP and traffic load of relevant neighboring radio cells as MCS index prediction parameter vector.

| RSRP (dBm) | traffic load | MCS index |
|---|---|---|
| >-65 | < 20% | 28 |
| | 20%<t<40% | 25 |
| | 40%<t<60% | 20 |
| | 60%<t<80% | 18 |
| | >80% | 15 |
| -80<r<-65 | < 20% | 20 |
| | 20%<t<40% | 18 |
| | 40%<t<60% | 15 |
| | 60%<t<80% | 10 |
| | >80% | 5 |
| -95< r < -80 | < 20% | 10 |
| | 20%<t<40% | 8 |
| | 40%<t<60% | 6 |
| | 60%<t<80% | 5 |
| | >80% | 0 |

(continued)

| RSRP (dBm) | traffic load | MCS index |
|---|---|---|
| -105< r < -95 | < 20% | 5 |
| | 20%<t<40% | 4 |
| | 40%<t<60% | 3 |
| | 60%<t<80% | 0 |
| | >80% | 0 |
| < -105 | < 20% | 0 |
| | 20%<t<40% | 0 |
| | 40%<t<60% | 0 |
| | 60%<t<80% | 0 |
| | >80% | 0 |

In the resent example the determining 14 of the spatial transmission mode is further based on a grade of reflection of the radio channel in the specific region. The determining 14 of the spatial transmission mode comprises using a spatial transmission mode look-up table that provides a spatial transmission mode for an estimated reception quality and a grade of reflection of the radio channel in a region. An example is shown in Table 2. In Table 2 RSRP is shown in dBm, the grade of multipath reflection is categorized in "High", "Normal" and "Low", and the number of MIMO layers (spatial channels that can be used simultaneously) is given.

Table 2: MIMO layers prediction table using RSRP and multipath reflection as MIMO layers prediction parameter vector

| RSRP (dBm) | Multipath reflection | MIMO layers |
|---|---|---|
| >-65 | High | 3 |
| | Normal | 2 |
| | Low | 2 |
| -80<r<-65 | High | 3 |
| | Normal | 2 |
| | Low | 1 |
| -95< r < -80 | High | 2 |
| | Normal | 1 |
| | Low | 1 |
| -105< r < -95 | High | 1 |
| | Normal | 1 |
| | Low | 1 |
| < -105 | High | 1 |
| | Normal | 1 |
| | Low | 1 |

The determining 14 of the spatial transmission mode may further comprise using a spatial transmission mode look-up table that provides a spatial transmission mode considering one or more parameters of the group of a presence of a line-of-sight radio channel, a presence of a non-line-of-sight radio channel, a maximum number of MIMO layers supported by the UE, a distance of the UE to the serving antenna and others.

The method 10 further comprises updating the spatial transmission mode look-up table based on measurements conducted by UEs and other devices (e.g. dedicated measurement devices) in the regions. The MIMO layers prediction table is created by measurements and updated continuously. The number of MIMO layers in Table 2 is an average of MIMO layers of the same prediction parameter vector, e. g. RSRP, grade of reflections, max. MIMO layers and LOS or NLOS.

Based on MCS index predicted for a mobile terminal, the spectral efficiency is given by the MCS index table specified in the 3GPP 38.214 specification, e.g. 3GPP TS 38.214 V18.1.0 (2023-12). The data rate bps/RB can be calculated for the TDD (Time Division Duplex) with 12 subcarriers per RB as follows:

$$\text{data rate per RB (in Mbps)} = 10^{-6} \cdot \left( r \cdot \gamma \cdot \mu \cdot s \frac{12}{T_s} (1 - OH) \right),$$

wherein

r is the RSRP,
$\gamma$ is the number of MIMO layers,
s is the spectral efficiency given in 3GPP MCS index table,
$T_s$ is the OFDM symbol duration,
$\mu$ is the UL or DL ratio (the relation of the number of time slots assigned to uplink (UL) and downlink (DL) in the TDD mode), and
OH is the overhead (signaling overhead) and takes the following values according to 3GPP

0.14, for frequency range FR1 for DL,
0.18, for frequency range FR2 for DL,
0.08, for frequency range FR1 for UL, and
0.10, for frequency range FR2 for UL.

Frequency bands for 5G New Radio (5GNR), which is the air interface or radio access technology of the 5G mobile networks, are separated into two different frequency ranges. First there is Frequency Range 1 (FR1), which includes sub-6 GHz frequency bands, and has been extended to cover potential new spectrum offerings from 410 MHz to 7125 MHz. The other is Frequency Range 2 (FR2) includes frequency bands from 24.25 GHz to 71.0 GHz.

The calculated bps/RB is adapted by a delta. This delta is derived from the measured bps/RB having the same or similar channel condition as that of the prediction parameter vector. In this example the method 10 further comprises deriving the delta value from measured and calculated data rates for similar transmission conditions as in the specific region.

In the present example the deriving of the delta value comprises, if for the specific region a measured data rate is not available, determining if a measured data rate is available for the similar transmission conditions for one or more neighbor regions of the specific region that is served by the same radio cell. In case it is available, the method 10 comprises calculating a data rate for the one or more neighbor regions and calculating the delta value per neighbor region based on a difference between the measured data rate and the calculated data rate of said neighbor region. In case multiple delta values are available for multiple neighbor regions, a weighted average is determined for the delta value. In case no measured data rate is available a cell specific delta value for the similar transmission conditions can be used if available. If not a global delta value for the similar transmission conditions can be used.

The algorithm to derive delta can be summarized as follows:

1. Check if there is a measured bps/RB having a channel condition of the same prediction parameter vector, e. g. RSPR, traffic load, MIMO layers and LOS or NLOS, the grade of reflections in a direct neighboring grid square that is served by the same radio cell.

2. If yes, calculate bps/RB for the grid square that has a measured bps/RB.

3. Check if there is measured bps/RB having channel condition of the same prediction parameter vector in second neighboring grid cell.

4. If yes, calculate bps/RB for the second neighboring grid square that has measured bps/RB.

5. Calculate delta = calculated bps/RB - measured bps/RB, if step 2 and/or step 4 is yes. If there are measured bps/RB in multiple grid squares, a weighted mean value of delta is derived.

6. If there is no measured bps/RB in neighboring cell available, check if a cell specific delta for the same prediction parameter vector.

If yes, the cell specific delta corresponding to the prediction parameter vector will be used.

If not, then a global delta of the corresponding prediction parameter vector is used.

A weighted mean value of delta can be derived from delta of direct neighboring cell (first tier/level) weighted with e.g. 1.0, while delta of the second neighboring cell (second tier/level) can be weighted e. g. 0,5 and so on. The weight can be calibrated using measurements.

In examples neighbor regions with similar transmission conditions as in the specific region are considered for deriving the delta value from measured and calculated data rates. The similar transmission conditions comprise one or more elements of the group of

- the neighbor region has a reception quality within a predefined range of the reception quality of the specific region, e.g. the RSRP is within a predefined dBm-range,
- the neighbor region has a traffic load of its relevant neighboring radio cells within a predefined (e.g. %-range) range of the traffic load of the relevant neighboring radio cells of the specific region,
- the neighbor region has a radio channel with a grade of reflection within a predefined range of the grade of reflection of the radio channel of the specific region (e.g. in the above example is also high, normal or low, or not more than one degree higher or lower),
- the neighbor region and the specific region have radio channels with or without a line-of-sight path, and
- the neighbor region and the specific region has a same spatial transmission mode (e.g. the same number of MIMO-layers.

Examples provide an algorithm that predicts a data rate (bps/RB) of a mobile device at a specific time and at a specific location applying an RSRP map and a bps/RB calculation algorithm using an MCS prediction table and a MIMO layers prediction table. Both tables are created by measurement and updated continuously. The calculated bps/RB is adapted by a delta that is derived from measured bps/RB in the neighboring radio cells.

For example, each GS in a RSRP map is associated with measured bps/RBs and/or predicted bps/RBs for a specific prediction parameter vector. Each bps/RB is valid for a specific prediction parameter vector, e. g. RSPR, traffic load, MIMO layers, LOS or NLOS and the grade of reflections. The MCS prediction table may be created by measurement for a prediction parameter vector and updated continuously. The MIMO layers prediction table may be created by measurement for a prediction parameter vector and updated continuously. For example, the MCS index prediction table and the MIMO layers prediction table are available in two types, global and radio cell specific, respectively.

The traffic load of relevant neighboring cells can be taken into consideration for the MCS index prediction. The relevant cells are cells of that DL transmission can reach the mobile device and UL transmission can reach the serving radio cell of the mobile device. The predicted bps/RB is adapted by a delta that can be derived as outlined above.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A method (10) for predicting a data rate of user equipment, UE, in a mobile communication system, the method (10) comprising

   considering (11) a grid of adjacent regions overlaying a coverage area of the mobile communication system;
   estimating (12) a reception quality for the regions of the grid to obtain estimated reception quality values for the regions of the grid;
   for a UE in a specific region

      determining (13) a transmission format for the specific region based on the estimated reception quality value for the specific region;
      determining (14) a spatial transmission mode for the specific region based on the estimated reception quality value for the specific region;
      predicting (15) a data rate for the UE in the specific region based on the transmission format and based on the spatial transmission mode,
      wherein the predicting (15) of the data rate further comprises calculating a data rate for the specific region based on the transmission format, the spatial transmission mode, and system transmission parameters, and
      wherein the predicting (15) of the data rate further comprises correcting the calculated data rate by a delta value.

2. The method (10) of claim 1, wherein the estimated reception quality is based on a reference signal reception power, RSRP, estimated for a UE in a region, wherein the transmission format comprises a modulation and coding scheme to be used for the UE in the specific region, and/or wherein the spatial transmission scheme comprises a number of Multiple-Input-Multiple-Output layers to be used for the UE in the specific region.

3. The method (10) of one of the claims 1 or 2, wherein the determining (13) of the transmission format is further based on an estimated traffic load in one or more neighboring radio cells of the specific region.

4. The method (10) of claim 3, wherein the determining (13) of the transmission format comprises using a transmission format look-up table that provides a transmission format for an estimated reception quality and/or an estimated traffic load in one or more neighboring radio cells of the specific region.

5. The method (10) of claim 4, wherein the determining (13) of the transmission format comprises using a transmission format look-up table that provides a transmission format considering one or more parameters of the group of presence of a line- of-sight radio channel, presence of a non-line-of-sight radio channel, a grade of reflections in the radio channel, and a distance of the UE to the serving antenna.

6. The method (10) of one of the claims 4 or 5, further comprising updating the transmission format look-up table based on measurements conducted by UEs and/or other devices in the regions.

7. The method (10) of one of the claims 1 to 6, wherein the determining (14) of the spatial transmission mode is further based on a grade of reflection of the radio channel in the specific region.

8. The method (10) of claim 7, wherein the determining (14) of the spatial transmission mode comprises using a spatial transmission mode look-up table that provides a spatial transmission mode for an estimated reception quality and/or a grade of reflection of the radio channel in a region.

9. The method (10) of claim 8, wherein the determining (14) of the spatial transmission mode comprises using a spatial transmission mode look-up table that provides a spatial transmission mode considering one or more parameters of the group of a presence of a line-of-sight radio channel, a presence of a non-line-of-sight radio channel, a maximum number of MIMO layers supported by the UE, and a distance of the UE to the serving antenna.

10. The method (10) of one of the claims 8 or 9, further comprising updating the spatial transmission mode look-up table based on measurements conducted by UEs and/or other devices in the regions.

11. The method (10) of claim 10, further comprising deriving the delta value from measured and calculated data rates for similar transmission conditions as in the specific region.

12. The method (10) of claim 11, wherein the deriving of the delta value comprises
if for the specific region a measured data rate is not available

determining if a measured data rate is available for the similar transmission conditions for one or more neighbor regions of the specific region that is served by the same radio cell, and
in case it is available

calculating a data rate for the one or more neighbor regions; calculating the delta value per neighbor region based on a difference between the measured data rate and the calculated data rate of said neighbor region, in case multiple delta values are available for multiple neighbor regions, determining a weighted average for the delta value,
in case no measured data rate is available,
use a cell specific delta value for the similar transmission conditions if available and if not use a global delta value for the similar transmission conditions.

13. The method (10) of one of the claims 11 or 12, wherein the similar transmission conditions comprise one or more elements of the group of

the neighbor region has a reception quality within a predefined range of the reception quality of the specific region,
the neighbor region has a traffic load of its relevant neighboring radio cells within a predefined range of the traffic load of the relevant neighboring radio cells of the specific region,
the neighbor region has a radio channel with a grade of reflection within a predefined range of the grade of reflection of the radio channel of the specific region,
the neighbor region and the specific region have radio channels with or without a line-of-sight path, and
the neighbor region and the specific region has a same spatial transmission mode.

14. A computer program having a program code for performing one of the methods (10) of one of the claims 1 to 13, when the computer program is executed on a computer, a processor, or a programmable hardware component.

15. An apparatus (20) for a mobile communication system, comprising

one or more interfaces (22) configured to communicate in the mobile communication system; and
one or more processing devices (24) configured to perform one of the methods of one of the claims 1 to 13.

considering a grid of adjacent regions overlaying a coverage area of the mobile communication system

11

estimating a reception quality for the regions of the grid to obtain estimated reception quality values for the regions of the grid

12

for a UE in a
specific region

determining a transmission format for the specific region based on the estimated reception quality value for the specific region

13

determining a spatial transmission mode for the specific region based on the estimated reception quality value for the specific region

14

predicting a data rate for the UE in the specific region based on the transmission format and based on the spatial transmission mode,

wherein the predicting of the data rate further comprises calculating a data rate for the specific region based on the transmission format, the spatial transmission mode, and system transmission parameters, and wherein the predicting of the data rate further comprises correcting the calculated data rate by a delta value

<u>10</u>

16

Fig. 1

Fig. 2

| | | | | |
|---|---|---|---|---|
| $GS_{i+2, j-2}$ | $GS_{i+2, j-1}$ | $GS_{i+2, j}$ | $GS_{i+2, j+1}$ | $GS_{i+2, j+2}$ |
| $GS_{i+1, j-2}$ | $GS_{i+1, j-1}$ | $GS_{i+1, j}$ | $GS_{i+1, j+1}$ | $GS_{i+1, j+2}$ |
| $GS_{i, j-2}$ | $GS_{i, j-1}$ | $GS_{i, j}$ | $GS_{i, j+1}$ | $GS_{i, j+2}$ |
| $GS_{i-1, j-2}$ | $GS_{i-1, j-1}$ | $GS_{i-1, j}$ | $GS_{i-1, j+1}$ | $GS_{i-1, j+2}$ |
| $GS_{i-2, j-2}$ | $GS_{i-2, j-1}$ | $GS_{i-2, j}$ | $GS_{i-2, j+1}$ | $GS_{i-2, j+2}$ |

Fig. 3

Fig. 4

## EUROPEAN SEARCH REPORT

**Application Number**

EP 24 16 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KATO KOHEI ET AL: "Deterministic Video Streaming with Deep Learning Enabled Base Station Intervention for Stable Remote Driving System", 2021 IEEE INTERNATIONAL CONFERENCE ON COMMUNICATIONS WORKSHOPS (ICC WORKSHOPS), IEEE, 14 June 2021 (2021-06-14), pages 1-6, XP033938756, DOI: 10.1109/ICCWORKSHOPS50388.2021.9473522 [retrieved on 2021-07-02] | 1,2, 7-11,14, 15 | INV. H04L1/00 H04W28/22 |
| A | * Abstract; Sections I and II.B. * | 3-6,12, 13 | |
| Y | US 7 764 727 B2 (ATHEROS COMM INC [US]) 27 July 2010 (2010-07-27) | 1,2, 7-11,14, 15 | |
| A | * Summary of the Invention. * | 3-6,12, 13 | |
| A | JP 2014 030100 A (SONY CORP) 13 February 2014 (2014-02-13) * paragraph [0026] - paragraph [0124]; figure 2 * | 1-15 | TECHNICAL FIELDS SEARCHED (IPC) H04L H04W |
| A | TOBIAS KALLEHAUGE ET AL: "Predictive Rate Selection for Ultra-Reliable Communication using Statistical Radio Maps", ARXIV.ORG, CORNELL UNIVERSITY LIBRARY, 201 OLIN LIBRARY CORNELL UNIVERSITY ITHACA, NY 14853, 16 August 2022 (2022-08-16), XP091295388, * the whole document * | 1-15 | |

The present search report has been drawn up for all claims

| Place of search | Date of completion of the search | Examiner |
|---|---|---|
| Munich | 2 September 2024 | Martínez Martínez, V |

EPO FORM 1503 03.82 (P04C01)

## ANNEX TO THE EUROPEAN SEARCH REPORT
## ON EUROPEAN PATENT APPLICATION NO.

EP 24 16 5040

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2024

| Patent document cited in search report | | Publication date | Patent family member(s) | | Publication date |
|---|---|---|---|---|---|
| US 7764727 | B2 | 27-07-2010 | TW | I404361 B | 01-08-2013 |
| | | | US | 2007206695 A1 | 06-09-2007 |
| | | | WO | 2006076697 A2 | 20-07-2006 |
| JP 2014030100 | A | 13-02-2014 | CN | 104509134 A | 08-04-2015 |
| | | | EP | 2880879 A1 | 10-06-2015 |
| | | | JP | 2014030100 A | 13-02-2014 |
| | | | US | 2015181374 A1 | 25-06-2015 |
| | | | US | 2016345134 A1 | 24-11-2016 |
| | | | WO | 2014020869 A1 | 06-02-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24162491 A